# EUROPEAN PATENT APPLICATION

(11) **EP 3 957 681 A1**
(43) Date of publication of application: **23.02.2022**
(21) Application number: 21188555.3
(22) Date of filing: 29.07.2021
(51) Int. Cl.: C08K 3/16, C08K 3/30, C08K 5/103, C08K 5/42, B32B 27/18, B32B 27/32, C08J 3/22

(54) **MODIFIER FOR POLYOLEFIN-BASED AGRICULTURAL FILM, MASTER BATCH FOR POLYOLEFIN-BASED AGRICULTURAL FILM, POLYOLEFIN-BASED AGRICULTURAL FILM, AND LAMINATED FILM**

(30) Priority: 19.08.2020 JP 2020138435
(71) Applicant: Takemoto Yushi Kabushiki Kaisha, Gamagori-shi, Aichi 443-8611 (JP)
(72) Inventor: NISHI, Yusuke, Aichi-ken, 443-8611 (JP)
(74) Representative: Maikowski & Ninnemann Patentanwälte Partnerschaft mbB

(57) **Abstract**

A modifier for a polyolefin-based agricultural film includes: a nonionic surfactant (A), an organic sulfonate (B), an inorganic salt (C), and an inorganic substance (D) different than the inorganic salt (C). The inorganic salt (C) is one or more selected from the group consisting of sodium sulfate, potassium sulfate, calcium sulfate, lithium sulfate, sodium chloride, potassium chloride, lithium chloride, magnesium chloride, and calcium chloride.

## Description

### BACKGROUND

This disclosure relates generally to modifiers for polyolefin-based agricultural films, and to master batches, polyolefin-based agricultural films, and laminated films, each containing the modifier.

Agricultural films used for tunnel cultivation or greenhouse cultivation need various characteristics, such as durability, transparency, and anti-fogging properties. Functional films each having various characteristics have been provided, as disclosed in JP 2007-002105 A and JP H09-227744 A

For instance, a polyolefin-based film is widely used for the above indicated purposes. However, since polyolefin is hydrophobic, the film made of only polyolefin has many problems. For instance, fogging due to moisture, electrification due to static electricity, or the like may occur. When the agricultural film is foggy, the transmittance of sunlight decreases, thereby stunting the growth of cultivated crops. Thus, various polyolefin-based films each containing anti-fogging agents have been provided to solve this problem. For example, JP H10-000035 A discloses an anti-flogging agent comprising a partial ester of a polyhydric alcohol and a saturated fatty acid having 14 to 22 carbon atoms. JP H10-001571 A discloses that a nonionic surfactant, such as sorbitan sesquistearate, and an alkyl sulfonate, such as sodium alkyl sulfonate, may be added to a polyolefin resin. JP 2018-193512 A discloses that a specific nonionic surfactant, a specific organic sulfonate, and a specific inorganic salt may be blended into a polyolefin resin, so as to achieve a high anti-fogging property and anti-static property.

However, these polyolefin films do not have a high anti-drip property, which is required for agricultural films. The anti-drip property is a property of allowing condensed water adhering to a surface of a film to flow along the surface of the film. If the film has a low anti-drip property, there would be a possibility that when the humidity of the cultivation environment is high, water condenses on the surface of the film and forms droplets. These droplets may then fall and adhere to the cultivated crops, thereby resulting in adverse effects. Further, because there are also other problems, such as an increase in production cost due to a rise in crude oil prices, it is desired not to reduce the manufacturing productivity of the film.

Thus, there has been a need for a polyolefin-based agricultural film which can maintain a high anti-drip property for a long period of time, while keeping high transparency and productivity. There has also been a need for a modifier and a master batch in order to provide such a polyolefin-based agricultural film.

### SUMMARY

In one aspect of this disclosure, a modifier for a polyolefin-based agricultural film contains a nonionic surfactant (A), an organic sulfonate (B), an inorganic salt (C), and an inorganic substance (D) different than the inorganic salt (C). The inorganic salt (C) is one or more selected from the group consisting of sodium sulfate, potassium sulfate, calcium sulfate, lithium sulfate, sodium chloride, potassium chloride, lithium chloride, magnesium chloride, and calcium chloride.

The nonionic surfactant (A) may be a fatty acid ester having at least one hydroxyl group in the molecule. The fatty acid ester is made of a polyhydric alcohol and one or more fatty acids. The fatty acids may be one or more fatty acid derivatives.

The organic sulfonate (B) may be one or more selected from the group consisting of alkali metal salts of alkyl sulfonic acids each having an alkyl group with 6 to 22 carbon atoms, alkali metal salts of alkyl aryl sulfonates each having an alkyl group with 6 to 22 carbon atoms, and alkali metal salts of sulfo fatty acid esters each having an alkyl group with 6 to 22 carbon atoms.

The inorganic substance (D) may be one or more selected from the group consisting of silica, zeolite, talc, and diatomaceous earth.

The modifier for the polyolefin-based agricultural film may contain 1 to 75 parts by mass of the inorganic substance (D) when the total content of the components (A) to (D) is 100 parts by mass.

The modifier for the polyolefin-based agricultural film may further comprise an antioxidant (E).

The modifier for the polyolefin-based agricultural film may contain 2 to 70 parts by mass of the inorganic substance (D) when the total content of the components (A) to (E) is 100 parts by mass and when the content of the component (E) is not 0 parts by mass.

In another aspect of this disclosure, a master batch comprises any one of the above-described modifiers for the polyolefin-based agricultural films and a polyolefin resin. The master batch contains 10 to 45 parts by mass of the modifier when the total content of the modifier and the polyolefin resin is 100 parts by mass.

In another aspect of this disclosure, a polyolefin-based agricultural film comprises any one of the above-described modifiers for the polyolefin-based agricultural films and a polyolefin resin. The polyolefin-based agricultural film contains 0.1 to 5 parts by mass of the modifier when the total content of the modifier and the polyolefin resin is 100 parts by mass.

In the other aspect of this disclosure, a laminated film comprises the polyolefin-based agricultural film described above as one or more of surface layers thereof. The number of layers of the laminated film may be two. Alternatively, the number of layers may be three or more, with at least one intermediate layer.

In accordance with the aspects of this disclosure, it is possible to obtain a polyolefin-based agricultural film which can maintain a high anti-drip property for a long time, while maintaining high transparency and high productivity.

### DETAILED DESCRIPTION

### [Polyolefin-based Agricultural Film]

An agricultural film of the present embodiment is a polyolefin-based film and can be used in tunnel cultivation, greenhouse cultivation or the like. The polyolefin-based agricultural film (hereinafter, also referred to as a "film") is manufactured by blending a polyolefin resin with a modifier for the polyolefin-based agricultural film (hereinafter, also referred to as a "modifier") and molding it. The polyolefin-based agricultural film may be produced by preparing a master batch containing a polyolefin resin and a high (higher than the final end product) concentration of the modifier, and then molding the mixture of the master batch and polyolefin resin.

### [Modifier for Polyolefin-based Agricultural Film]

The modifier contains a nonionic surfactant (A), an organic sulfonate (B), a specific inorganic salt (C), and an inorganic material (D) different than the inorganic salt (C). The modifier may also contain an antioxidant (E).

### < Component (A): Nonionic Surfactant >

The nonionic surfactant (A) may be any of the well-known nonionic surfactants and is not particularly limited. The nonionic surfactant (A) may be used alone or in a combination of two or more.

The component (A) may be a fatty acid ester having at least one hydroxyl group in a molecule corresponding to the surfactant. The fatty acid ester is formed of, for example, a polyhydric alcohol (a1) and one or more fatty acids and/or one or more fatty acid derivatives (a2). The fatty acid ester having at least one hydroxyl group in a molecule also may be hereinafter referred to as a "partial ester."

Examples of the polyhydric alcohol (a1) include (1) polyhydric alcohols, such as ethylene glycol, glycerol, pentaerythritol, sorbitol, and glucose; (2) cyclic ether polyhydric alcohols obtained by dehydration of sorbitol, such as sorbitan and sorbide; (3) (poly) ether tetraols, such as diglycerol and ethylene glycol diglyceryl ether; (4) (poly) ether pentaols, such as triglycerol and trimethylol propane diglyceril ether; and (5) (poly) ether hexols, such as tetraglycerol and dipentaerythritol. It is preferable that the polyhydric alcohol (a1) has 3 to 6 hydroxyl groups from the viewpoint of an initial anti-drip property, etc.

Examples of the fatty acid and the fatty acid derivative (a2) include fatty acids, such as caproic acid, sorbic acid, enanthic acid, caprylic acid, pelargonic acid, capric acid, undecylic acid, undecylenic acid, lauric acid, tridecylic acid, myristic acid, pentadecylic acid, palmitic acid, margaric acid, stearic acid, isostearic acid, arachidic acid, henicosyl acid, docosanoic acid, oleic acid, linoleic acid, linolenic acid, erucic acid, 12-hydroxystearic acid, ricinoleic acid, and derivatives thereof. It is preferable that the fatty acid and the fatty acid derivative (a2) have 8 to 22 carbon atoms from the viewpoint of an initial anti-drip property, etc. The fatty acid derivative is a compound in which a functional group of a fatty acid is replaced with another functional group. The fatty acid derivative may be capable of forming a fatty acid ester by being reacted with, e.g., the polyhydric alcohol (a1).

### < Component (B): Organic Sulfonate >

Conventionally known organic sulfonates can be used as the component (B), and the specific kind thereof is not particularly limited. The organic sulfonate (B) may be used alone, or two or more kinds thereof may be used in combination.

The organic sulfonate (B) may be one or more selected from the group consisting of alkali metal salts of alkyl sulfonic acids each having an alkyl group with 6 to 22 carbon atoms (b1), alkali metal salts of alkyl aryl sulfonates each having an alkyl group with 6 to 22 carbon atoms (b2), and alkali metal salts of sulfo fatty acid esters each having an alkyl group with 6 to 22 carbon atoms (b3). The alkali metal salts of alkyl sulfonic acids each having the alkyl group with 6 to 22 carbon atoms (b1) may be more preferable in some embodiments, from the viewpoint of the sustainability of an anti-drip property, etc.

Examples of the alkali metal salts of alkyl sulfonic acids each having the alkyl group with 6 to 22 carbon atoms (b1) include lithium hexyl sulfonate, sodium hexyl sulfonate, potassium hexyl sulfonate, lithium octyl sulfonate, sodium octyl sulfonate, potassium octyl sulfonate, lithium nonyl sulfonate, sodium nonyl sulfonate, potassium nonyl sulfonate, lithium decyl sulfonate, sodium decyl sulfonate, potassium decyl sulfonate, lithium undecyl sulfonate, sodium undecyl sulfonate, potassium undecyl sulfonate, lithium dodecyl sulfonate, sodium dodecyl sulfonate, potassium dodecyl sulfonate, lithium tridecyl sulfonate, sodium tridecyl sulfonate, potassium tridecyl sulfonate, lithium tetradecyl sulfonate, sodium tetradecyl sulfonate, potassium tetradecyl sulfonate, lithium pentadecyl sulfonate, sodium pentadecyl sulfonate, potassium pentadecyl sulfonate, lithium hexadecyl sulfonate, sodium hexadecyl sulfonate, potassium hexyadecyl sulfonate, lithium heptadecyl sulfonate, sodium heptadecyl sulfonate, potassium heptadecyl sulfonate, lithium octadecyl sulfonate, sodium octadecyl sulfonate, potassium octadecyl sulfonate, lithium behenyl sulfonate, sodium behenyl sulfonate, and potassium behenyl sulfonate. Examples of the alkali metal salts of alkyl aryl sulfonates each having the alkyl group with 6 to 22 carbon atoms (b2) include lithium hexyl benzene sulfonate, sodium hexyl benzene sulfonate, potassium hexyl benzene sulfonate, lithium octyl benzene sulfonate, sodium octyl benzene sulfonate, potassium octyl benzene sulfonate, lithium nonyl benzene sulfonate, sodium nonyl benzene sulfonate, potassium nonyl benzene sulfonate, lithium decyl benzene sulfonate, sodium decyl benzene sulfonate, potassium decyl benzene sulfonate, lithium undecyl benzene sulfonate, sodium undecyl benzene sulfonate, potassium undecyl benzene sulfonate, lithium dodecyl benzene sulfonate, sodium dodecyl benzene sulfonate, potassium dodecyl benzene sulfonate, lithium tridecyl benzene sulfonate, sodium tridecyl benzene sulfonate, potassium tridecyl benzene sulfonate, lithium tetradecyl benzene sulfonate, sodium tetradecyl benzene sulfonate, potassium tetradecyl benzene sulfonate, lithium pentadecyl benzene sulfonate, sodium pentadecyl benzene sulfonate, potassium pentadecyl benzene sulfonate, lithium hexadecyl benzene sulfonate, sodium hexadecyl benzene sulfonate, potassium hexadecyl benzene sulfonate, lithium heptadecyl benzene sulfonate, sodium heptadecyl benzene sulfonate, potassium heptadecyl benzene sulfonate, lithium octadecyl benzene sulfonate, sodium octadecyl benzene sulfonate, potassium octadecyl benzene sulfonate, lithium behenyl benzene sulfonate, sodium behenyl benzene sulfonate, potassium behenyl benzene sulfonate, lithium dibutyl naphthalene sulfonate, sodium dibutyl naphthalene sulfonate, and potassium dibutyl naphthalene sulfonate. Examples of the alkali metal salts of sulfo fatty acid esters each having the alkyl group with 6 to 22 carbon atoms (b3) include sodium diethyl sulfosuccinate, sodium dipropyl sulfosuccinate, sodium dioctyl sulfosuccinate, potassium dioctyl sulfosuccinate, lithium didodecyl sulfosuccinate, lithium dieicosyl sulfosuccinate, sodium dodecyl sulfoacetate, potassium nonyl phenoxy polyethylene glycol (the number of oxyethylene repeat units is 1 to 10) sulfoacetate. When the component (B) is selected from (b1) to (b3), a sodium salt thereof may be more preferable in certain embodiments.

### < Component (C): Inorganic Salt >

The inorganic salt (C) is one or more selected from the group consisting of sodium sulfate, potassium sulfate, calcium sulfate, lithium sulfate, sodium chloride, potassium chloride, lithium chloride, magnesium chloride, and calcium chloride. The inorganic salt (C) is preferably sodium sulfate and/or sodium chloride in some embodiments, from the viewpoint of an anti-drip property, transparency, etc.

### < Component (D): Inorganic substance >

The component (D) may be selected from known inorganic materials other than the component (C), and is not particularly limited. The inorganic substance (D) may be used alone, or two or more kinds thereof may be used in combination.

Examples of the inorganic substance (D) include: inorganic salts, such as magnesium sulfate and potassium nitrate; oxide-based inorganic particles, such as silica, diatomaceous earth, alumina, iron oxide, and ferrite; and silicate-based inorganic particles, such as zeolite, talc, wollastonite, mica, and clay mineral. The film may be formed by inflation molding or other suitable methods. At this time, the component (D) may suppress extrusion pulsations during film production, thereby maintaining good productivity. The component (D) is preferably silica, zeolite, talc, or diatomaceous earth; is more preferably silica, zeolite, or talc; is still more preferably silica or zeolite; and is most preferably silica.

### < Component (E): Antioxidant >

The component (E) may be selected from conventionally known antioxidants, and is not particularly limited. The antioxidant (E) may be used alone, or two or more kinds thereof may be used in combination.

Examples of the antioxidant (E) include: phenolic antioxidant, such as stearyl 3-(3,5-di-tert-butyl-hydrxyphenyl) propionate and pentaerythritol tetrakis [3-(3,5-di-tert-butyl-4-hydrxyphenyl) propionate]; sulfur-based antioxidants, such as bis [3-(dodecylthio) propionic acid] 2,2-bis [[3-(dodecylthio)-1-oxopropyloxy] methyl]-1,3-propylene; phosphorus-based antioxidants, such as tris (2,4-di-tert-butylphenyl) phosphite; and phenol-phosphorus-based antioxidants, such as 2-tert-butyl-6-methyl-4-[3-[(2,4,8,10-tetra-tert-butyldibenzo [d,f] [1,3,2] dioxaphosphepin-6-yl) oxy] propyl] phenol.

### < Content ratio >

When the total content (amount) of the components (A) to (D) in the modifier is 100 parts by mass, the content of the component (D) is preferably 1 to 75 parts by mass. When the total content of the components (A) to (D) is 100 parts by mass, the content of the component (D) is more preferably 2 to 60 parts by mass, and still more preferably 5 to 40 parts by mass.

The modifier may contain the antioxidant (E). In such case, when the total content of the components (A) to (E) is 100 parts by mass, the content of the component (D) is preferably 2 to 70 parts by mass, and still more preferably 5 to 40 parts by mass, from the view point of productivity, etc.

### < Polyolefin resin >

Examples of the polyolefin resin include homopolymers of alpha-olefin and copolymers of a large amount of alpha-olefin monomers and a small amount of heterogeneous monomers. In particular, examples of the polyolefin resin include polyethylene, polypropylene, ethylene-alfa-olefin copolymer, such as ethylene-butene copolymer, ethylene4-methyl-1-pentene copolymer, ethylene-hexene copolymer and ethylene-octene copolymer, ethylene-vinyl acetate copolymer, ethylene-acrylate copolymer, ethylene-methylacrylate copolymer, ethylene-vinyl alcohol copolymer obtained by saponifying ethylene-vinyl acetate copolymer, ethylene-methylmetacrylate copolymer, ethylene-vinyl acetate-methylmetacrylate copolymer, and ionomer resin. It is also possible to use a mixture of two or more polyolefin resins.

Additives can be also added to the polyolefin resin(s) according to various purposes. Examples of the additives include anti-ultraviolet polymer stabilizers, ultraviolet absorbers, infrared absorbers, anti-blocking agents, mist suppression agents, heat retaining agents, heat stabilizers, neutralizers, plasticizers, lubricants, flame retardants, nucleating agents, and pigments.

### < Master batch >

The master batch for the polyolefin-based agricultural film (hereinafter, also referred to as a "master batch") contains the modifier for the polyolefin-based agricultural film and the polyolefin resin. The content of the modifier is preferably 10 to 45 parts by mass when the total content of the modifier and the polyolefin resin is 100 parts by mass. The master batch may optionally contain additives in accordance with various purposes. Examples of the additives include anti-ultraviolet polymer stabilizers, ultraviolet absorbers, infrared absorbers, anti-blocking agents, anti-static agents, anti-fogging agents, mist suppression agents, heat retaining agents, heat stabilizers, neutralizers, plasticizers, lubricants, flame retardants, nucleating agents, and pigments.

Conventional known methods can be used for producing the master batch. Examples of the production methods of the master batch include: (1) a first method comprising (1a) preparing a high-concentration master batch that contains the components (A) to (D) in a high concentration with the polyolefin resin and then (1b) blending the high-concentration master batch with the polyolefin resin; (2) a second method comprising (2a) blending the components (A) to (D) with the polyolefin resin in a mixer, such as a tumbler blender, a super mixer, or a Henschel mixer, and then (2b) melting, mixing, and granulating the mixture by an extruder, such as a single screw extruder or a multiscrew extruder; (3) a third method comprising (3a) melting the polyolefin resin in the extruder, (3b) adding the components (A) to (D) to the melted polyolefin resin by using a side feeder or pouring the liquefied components, and (3c) melting, mixing, and granulating the mixture of the polyolefin resin and the components (A) to (D); and (4) a fourth method composed of a combination of the second method and the third method. The high-concentration master batch may be produced by any one of the second to fourth methods. The device and the method for blending the polyolefin resin with the components (A) to (D) may be selected from known devices and methods based on the consistency of the components (A) to (D). When the components (A) to (D) are solid, the side feeder, the tumbler blender, the super mixer, or the Henschel mixer is preferably used. When the components (A) to (D) are liquid, pouring of the components, use of the super mixer, or the Henschel mixer is preferable. The solid component can be dissolved or dispersed in the liquid component, and then the mixture can be poured into the polyolefin resin.

### < Polyolefin Resin Film >

Conventionally known methods can be used for molding a film. Examples thereof include an inflation molding, such as air-cooling inflation molding, air-cooling two-stage inflation molding, air-cooling three-stage inflation molding, and water-cooling inflation molding, and a T-die molding. In a case of the T-die molding, a straight manifold die, a coat hanger type, or a combination thereof can be used as a T-die. The production method of the film may include mixing the master batch with the polyolefin resin or directly adding the modifier to the polyolefin resin. The content of the modifier in the film is preferably 0.1 to 5 parts by mass when the total content of the modifier and the polyolefin resin is 100 parts by mass. The thickness of the film may be 10 to 300 µm, but is not limited to this thickness.

### < Laminated Film >

A laminated film contains two or more laminated layers, and has a modified film containing the above-described modifier as at least one of the surface layers. Other layer(s) of the laminated film may be made of a thermoplastic resin, an adhesive, an anchor coating agent, an adhesive resin, or the like. Examples of the thermoplastic resin include polyolefin resins; polyesters such as polyethylene terephthalate, polyamide such as Nylon^{®} 6, polyvinyl alcohol, and polystyrene; and acrylic resins such as polymethyl methacrylate. The same polyolefin resin as that contained in the modified film can be used as the thermoplastic resin. Additives can be added to the thermoplastic resin to accomplish various purposes. Examples of the additives include anti-ultraviolet polymer stabilizers, ultraviolet absorbers, infrared absorbers, anti-blocking agents, anti-static agents, anti-fogging agents, mist suppression agents, heat retaining agents, heat stabilizers, neutralizers, plasticizers, lubricants, flame retardants, nucleating agents, and pigments.

The laminated film can be manufactured by conventionally known methods. Examples of the manufacturing method include a dry lamination method, a sand lamination method, an extrusion lamination method, and a co-extrusion method. In a case the laminated film is produced by the dry lamination method, the sand lamination method, or the extrusion lamination method, known adhesive agents, such as polyurethane adhesive, organic titanium-type anchor coating agent, isocyanate-type anchor coating agent, and adhesive resin, can be used. In production by the co-extrusion method, inflation molding and T-die molding can be used, and the manufacturing method may or may not include a stretching step. The thickness of the laminated film may be 10 to 300 µm, but is not limited to this range.

The modifier for the polyolefin resin of the present disclosure comprises the nonionic surfactant (A), the organic sulfonate (B), the specific inorganic salt (C), and the specific inorganic substance (D). Due to these components, the modifier can provide a high anti-drip property to the film while maintaining high transparency and productivity of the film. The anti-drip property is important for an agricultural film. Further, it is possible to reduce the possibility that extrusion pulsations occur during formation of the film, so as to be able to stably manufacture a film having a predetermined thickness, thereby improving productivity.

### < Examples >

Examples of this disclosure will be describe below in order to clearly show configurations and effects thereof Regarding content ratio in the following description, the terms "parts" and "%" means parts by mass and percent by mass, respectively. Table 1 shows example compositions of modifiers for polyolefin-based agricultural films.

### Example 1-1

63.20 parts of a partial ester of diglycerol and lauric acid (A-1) as the nonionic surfactant, 14.22 parts of sodium alkylsulfonate having an alkyl group with 13 to 18 carbon atoms (B-1) as the organic sulfonate, 1.58 parts of sodium sulfate (C-1) as the inorganic salt, 20.50 parts of silica (D-1) as the inorganic substance, and 0.5 parts of stearyl 3-(3,5-di-tert-butyl-4-hydrxyphenyl) propionate (E-1) as the antioxidant were uniformly mixed so as to obtain a modifier (K-1).

### Examples 1-2 to 1-15 and Comparative Examples 1 -1 to 14

In the same manner as the modifier (K-1) of Example 1-1, modifiers (K-2 to K-15, k-1 to k-4) of Examples 1-2 to 1-15 and Comparative Examples 1-1 to 1-4 were obtained. The compositions of the modifiers are shown in Table 1.

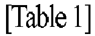

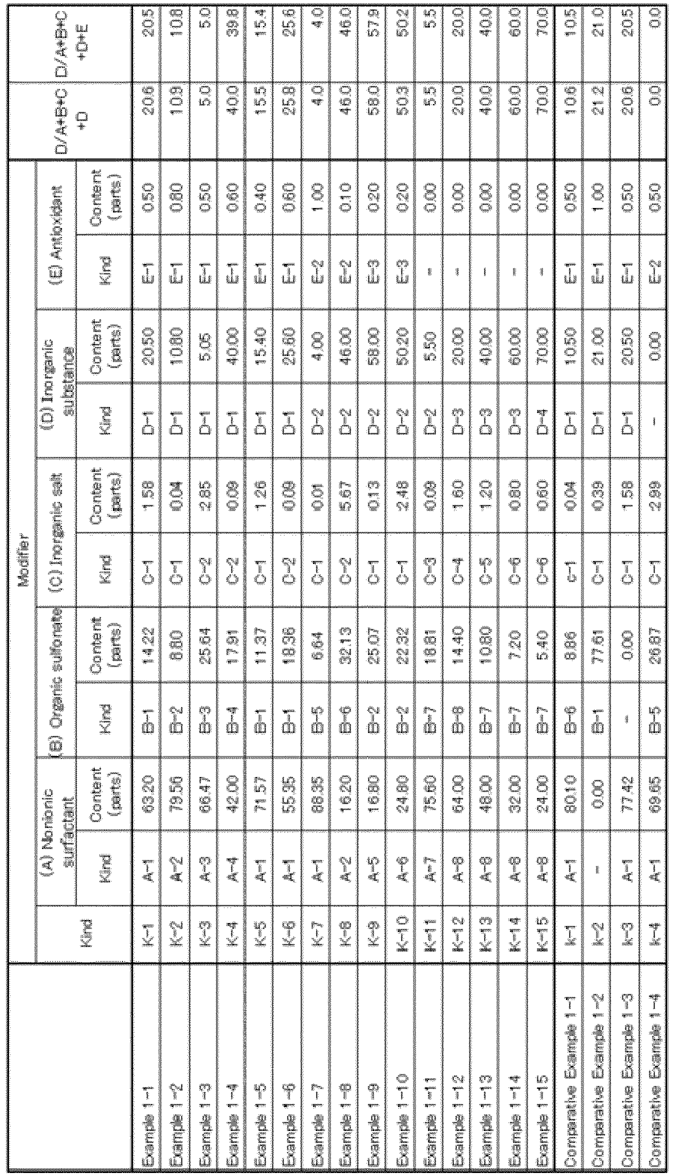

In Table 1, "D/A+B+C+D" means the content (parts by mass) of the inorganic substance (D) when the total content of the components (A) to (D) is 100 parts by mass. "D/A+B+C+D+E" means the content (parts by mass) of the inorganic substance (D) when the total content of the components (A) to (E) is 100 parts by mass.

The components (A) to (E) used for Examples and Comparative Examples are shown below
A-1: partial ester of diglycerol and lauric acid
A-2: partial ester of diglycerol and stearic acid
A-3: partial ester of glycerol and oleic acid
A-4: partial ester of sorbitan and lauric acid
A-5: partial ester of tetraglycerol and hexanoic acid
A-6: partial ester of ethylene glycol and docosanoic acid
A-7: partial ester of glycerol and acetic acid
A-8: partial ester of decaglycerol and lauric acid
B-1: sodium alkyl sulfonate having an alkyl group with 13 to 18 carbon atoms
B-2: sodium pentadecyl sulfonate
B-3: sodium hexyl sulfonate
B-4: sodium behenyl sulfonate
B-5: sodium alkyl benzene sulfonate having an alkyl group with 10 to 16 carbon atoms
B-6: sodium dodecyl benzene sulfonate
B-7: lithium dodecyl benzene sulfonate
B-8: potassium dioctyl sulfosuccinate
C-1: sodium sulfate
C-2: sodium chloride
C-3: potassium chloride
C-4: lithium chloride
C-5: calcium chloride
C-6: potassium sulfate
c-1: sodium oleate
D-1: silica
D-2: zeolite
D-3: talc
D-4: diatomaceous earth
E-1: Irganox 1076^{®} (hindered phenol type, stearyl 3-(3,5-di-tert-butyl4-hydrxyphenyl) propionate)
E-2: Irganox 1010^{®} (hindered phenol type, pentaerythritol tetrakis (3-(3,5-di-tert-butyl-4-hydrxyphenyl) propionate)
E-3: Irgafos^{®} 168 (phosphite type, tris (2,4-di-tert-butylphenyl) phosphite)

### Example 2-1

80 parts of ethylene-(1-hexene) copolymer (density: 0.930 g/cm³; MFR: 1.0 g/min; the content of ethylene in the polymer: 96 %) (R-1) as the polyolefin resin and 20 parts of the modifier (K-1) of Example 1-1 were uniformly mixed so as to obtain a master batch (N-1) in which the density of the modifier was 20 %.

### Examples 2-2 to 2-15 and Comparative Examples 2-1 to 2-4

In the same manner as the master batch (N-1) of Example 2-1, mater batches (N-2 to N-15, and n-1 to n-4) of Examples 2-2 to 2-15 and Comparative Examples 2-1 to 2-4 were prepared. The compositions of the master batches are shown in Table 2.

**[Table 2]**

| | Master batch | | | | |
|---|---|---|---|---|---|
| | Kind | Raw materials | | | |
| | | Polyolefin resin | | Modifier | |
| | | Kind | Content (parts) | Kind | Content (parts) |
| Example 2-1 | N-1 | R-1 | 80 | K-1 | 20 |
| Example 2-2 | N-2 | R-2 | 80 | K-2 | 20 |
| Example 2-3 | N-3 | R-3 | 80 | K-3 | 20 |
| Example 2-4 | N-4 | R-4 | 55 | K-4 | 45 |
| Example 2-5 | N-5 | R-1 | 55 | K-5 | 45 |
| Example 2-6 | N-6 | R-1 | 80 | K-6 | 20 |
| Example 2-7 | N-7 | R-1 | 90 | K-7 | 10 |
| Example 2-8 | N-8 | R-1 | 80 | K-8 | 20 |
| Example 2-9 | N-9 | R-1 | 80 | K-9 | 20 |
| Example 2-10 | N-10 | R-1 | 80 | K-10 | 20 |
| Example 2-11 | N-11 | R-1 | 80 | K-11 | 20 |
| Example 2-12 | N-12 | R-1 | 80 | K-12 | 20 |
| Example 2-13 | N-13 | R-1 | 80 | K-13 | 20 |
| Example 2-14 | N-14 | R-1 | 80 | K-14 | 20 |
| Example 2-15 | N-15 | R-1 | 80 | K-15 | 20 |
| Comparative Example 2-1 | n-1 | R-1 | 80 | k-1 | 20 |
| Comparative Example 2-2 | n-2 | R-1 | 80 | k-2 | 20 |
| Comparative Example 2-3 | n-3 | R-1 | 80 | k-3 | 20 |
| Comparative Example 2-4 | n-4 | R-1 | 80 | k-4 | 20 |

The components (R) in Table 2 are shown below
R-1: ethylene-(1-hexene) copolymer (density: 0.930 g/cm³; MFR 1.0 g/10 min; the content of ethylene in the copolymer: 96 %)
R-2: ethylene-(1-butene) copolymer (density: 0.920 g/cm³; MFR 2.1 g/10 min; the content of ethylene in the copolymer: 95%)
R-3: ethylene-propylene copolymer (density: 0.90 g/cm³; MFR: 7.0 g/10 min; the content of ethylene in the copolymer: 4%)
R-4: ethylene-vinyl acetate copolymer (density: 0.936 g/cm³; MFR 2.0 g/min; the content of ethylene in the copolymer: 85%)

### Table 3 shows the raw materials, compositions, and thicknesses of films of the Examples. The section of "raw material" in Table 3 shows polyolefin resins and mater batches used for manufacturing the films. The section of "composition" in Table 3 shows polyolefin resins and modifiers, which are contained in the manufactured films.

### Example 3-1

90 parts of ethylene-(1-hexene) copolymer (density: 0.930 g/cm³; MFR 1.0 g/10 min; the content of ethylene in the copolymer: 96 %) (R-1) as the polyolefin resin, and 10 parts of the master batch (N-1) of Example 2-1 were mixed in a tumbler to obtain a mixture. The mixture was extruded by the T-die method while cooling it to 30°C, to form a film (F-1) having a thickness of 80 µm. Both the mixture and the film contained 2 parts of the modifier relative to 98 parts of the polyolefin resin.

### Examples 3-2 to 3-15 and Comparative Examples 3-1 to 3-4

In the same manner as the film (F-1) of Example 3-1, films (F-2 to F-15 and f-1 to f-4) of Examples 3-2 to 3-15 and Comparative Examples 3-1 to 3-4 were molded. The compositions and thicknesses of the films are shown in Table 3.

**[Table 3]**

| | Film | Raw materials | | | | Composition | | | | Thickness (*µ*m) |
|---|---|---|---|---|---|---|---|---|---|---|
| | | Polyolefin resin | | Master batch | | Polyolefin resin | | Modifier | | |
| | | Kind | Used amount (parts) | Kind | Used amount (parts) | Kind | Content (parts) | Kind | Content (parts) | |
| Example 3-1 | F-1 | R-1 | 90 | N-1 | 10 | R-1 | 98 | K-1 | 2 | 80 |
| Example 3-2 | F-2 | R-2 | 85 | N-2 | 15 | R-2 | 97 | K-2 | 3 | 6 |
| Example 3-3 | F-3 | R-3 | 95 | N-3 | 5 | R-3 | 99 | K-3 | 1 | 30 |
| Example 3-4 | F-4 | R-4 | 96 | N-4 | 4 | R-4 | 98.2 | K-4 | 1.8 | 10 |
| Example 3-5 | F-5 | R-1 | 96 | N-5 | 4 | R-1 | 98.2 | K-5 | 1.8 | 40 |
| Example 3-6 | F-6 | R-1 | 90 | N-6 | 10 | R-1 | 98 | K-6 | 2 | 40 |
| Example 3-7 | F-7 | R-1 | 95 | N-7 | 5 | R-1 | 99.5 | K-7 | 0.5 | 40 |
| Example 3-8 | F-8 | R-1 | 75 | N-8 | 25 | R-1 | 95 | K-8 | 5 | 40 |
| Example 3-9 | F-9 | R-1 | 80 | N-9 | 20 | R-1 | 96 | K-9 | 4 | 40 |
| Example 3-10 | F-10 | R-1 | 80 | N-10 | 20 | R-1 | 96 | K-10 | 4 | 40 |
| Example 3-11 | F-11 | R-1 | 99.5 | N-11 | 0.5 | R-1 | 99.9 | K-11 | 0.1 | 100 |
| Example 3-12 | F-12 | R-1 | 90 | N-12 | 10 | R-1 | 98 | K-12 | 2 | 40 |
| Example 3-13 | F-13 | R-1 | 90 | N-13 | 10 | R-1 | 98 | K-13 | 2 | 40 |
| Example 3-14 | F-14 | R-1 | 80 | N-14 | 20 | R-1 | 96 | K-14 | 4 | 40 |
| Example 3-15 | F-15 | R-2 | 80 | N-15 | 20 | R-1 | 96 | K-15 | 4 | 40 |
| Comparative Example 3-1 | f-1 | R-1 | 95 | n-1 | 5 | R-1 | 99 | k-1 | 1 | 40 |
| Comparative Example 3-2 | f-2 | R-1 | 90 | n-2 | 10 | R-1 | 98 | k-2 | 2 | 40 |
| Comparative Example 3-3 | f-3 | R-1 | 90 | n-3 | 10 | R-1 | 98 | k-3 | 2 | 40 |
| Comparative Example 3-4 | f-4 | R-1 | 90 | n-4 | 10 | R-1 | 98 | k-4 | 2 | 40 |

The anti-drip property, transparency, appearance, and productivity of the films (F-1 to F-15 and f-1 to f-4) were tested by the following test methods. Table 4 shows test results of the films.

### Test of Anti-drip Property

A thermostatic tank with water at a temperature of 40°C was placed under an atmosphere of 20 °C. The film was stretched on a frame attached to the thermostatic tank, such that the film was positioned just above the water stored in the thermostatic tank and inclined at an angle of 30 degrees to a horizontal plane. After 3 hours, adhesion of water drops to the surface of the film was observed to evaluate an initial anti-drip property on the basis of the following evaluation criteria. Similarly, after 10 days, adhesion of water drops to the surface of the film was observed to evaluate a sustainability of the anti-drip property. In addition, when a laminated film having A to C layers described below was tested, the laminated film was stretched on the frame such that the layer A faced downwardly, i.e. was positioned lower than the layers B and C, and inclined at an angle of 30 degrees to the horizontal plane.

Evaluation criteria for anti-drip property
4: Water drops do not adhere.
3: The adhesion area of water drops is less than 50 %.
2: The adhesion area of water drops is 50 % or more and less than 80 %.
1: The adhesion area of water drops is 80 % or more.

### Evaluation of Transparency

The film was conditioned at 20°C for 24 hours under a relative humidity of 65 %. Then, a haze value was measured by a method based on JIS K 7136:2000 using a haze meter (trade name: NDH-5000, manufactured by Nippon Denshoku Industries Co., Ltd.). The transparency of the film was evaluated on the basis of the following criteria.

### Evaluation Criteria for Transparency

3 (Excellent): The haze value is less than 10%
2 (Good): The haze value is 10% or more and less than 20 %
1 (Bad): The haze value is 20 % or more

### Evaluation of Appearance

After the film was conditioned at 20°C for 24 hours under a relative humidity of 65 %, the film was visually observed. The appearance of the film was evaluated on the basis of the following criteria.

### Evaluation Criteria for Appearance

3 (Excellent): No lumps (of inorganic material caused by poor dispersion) were observed in the film.
2 (Good): A few lumps were observed in the film.
1 (Bad): Many lumps were observed in the film.

### Evaluation of Productivity

During formation of the film, film formation stability was visually observed to evaluate the productivity of the film on the basis of following criteria.

### Evaluation Criteria for Productivity

4 (Excellent): For 5 hours or more from the start of film formation, no extrusion pulsations were observed, and a film having a uniform thickness was obtained.
3 (Good): For 2 hours or more and less than 5 hours from the start of film formation, no extrusion pulsations were observed, and a film having a uniform thickness was obtained.
2 (Passing Grade): For 30 minutes or more and less than 2 hours from the start of film formation, no extrusion pulsations were observed, but a film having a uniform thickness was not obtained.
1 (Bad): For less than 30 minutes from the start of film formation, extrusion pulsations were observed, and a film having a uniform thickness was not obtained.

**[Table 4]**

| | Film | Result | | | | |
|---|---|---|---|---|---|---|
| | | Anti-drip property | | Transparency | Appearance | Productivity |
| | | Initial | Sustainable | | | |
| Example 3-1 | F-1 | 4 | 4 | 3 | 3 | 4 |
| Example 3-2 | F-2 | 4 | 4 | 3 | 3 | 4 |
| Example 3-3 | F-3 | 4 | 4 | 3 | 3 | 4 |
| Example 3-4 | F-4 | 4 | 4 | 3 | 3 | 4 |
| Example 3-5 | F-5 | 4 | 4 | 3 | 3 | 4 |
| Example 3-6 | F-6 | 4 | 4 | 3 | 3 | 4 |
| Example 3-7 | F-7 | 4 | 3 | 3 | 3 | 4 |
| Example 3-8 | F-8 | 4 | 3 | 3 | 3 | 4 |
| Example 3-9 | F-9 | 3 | 4 | 3 | 3 | 4 |
| Example 3-10 | F-10 | 3 | 4 | 3 | 3 | 4 |
| Example 3-11 | F-11 | 2 | 2 | 3 | 3 | 3 |
| Example 3-12 | F-12 | 2 | 2 | 2 | 3 | 3 |
| Example 3-13 | F-13 | 2 | 2 | 2 | 3 | 3 |
| Example 3-14 | F-14 | 2 | 2 | 2 | 2 | 3 |
| Example 3-15 | F-15 | 2 | 2 | 2 | 2 | 2 |
| Comparative Example 3-1 | f-1 | 2 | 1 | 3 | 3 | 4 |
| Comparative Example 3-2 | f-2 | 1 | 1 | 3 | 3 | 4 |
| Comparative Example 3-3 | f-3 | 3 | 1 | 3 | 3 | 4 |
| Comparative Example 3-4 | f-4 | 3 | 2 | 3 | 3 | 1 |

Each of Examples 3-1 to 3-15 had desired anti-drip property, transparency, appearance, and productivity. On the other hand, Comparative Example 3-1 had a bad sustainability of anti-drip property since the inorganic salt (C) does not correspond to any of sodium sulfate, potassium sulfate, calcium sulfate, lithium sulfate, sodium chloride, potassium chloride, lithium chloride, magnesium chloride, or calcium chloride. Comparative Example 3-2 had a bad anti-drip property since a nonionic surfactant (A) was not contained therein. Comparative Example 3-3 had a bad sustainability of anti-drip property since an organic sulfonate (B) was not contained therein. Comparative Example 3-4 had a bad productivity since an inorganic material (D) was not contained therein.

Table 5 shows compositions and thicknesses of laminated films of Examples and Comparative Examples. Each of the laminated films includes: a layer A composed of a film containing the modifier, and layers B and C made from polyolefin resin without the modifier. The section of "raw material" of the layer A shows the kinds and the amounts of polyolefin resins and the master batches used for manufacturing the films. The section of "composition" of the layer A shows the compositions of polyolefin resins and the modifiers contained in the layer A. Table 5 further shows ratios between the thickness of each layer and shows the total thickness of the layered film.

### Example 4-1

90 parts of ethylene-(1-hexene) copolymer (density: 0.930 g/cm³; MFR: 1.0 g/10 min; the content of ethylene in the copolymer: 96 %) (R-1) as the polyolefin resin, and 10 parts of the master batch (N-1) were blended with each other to obtain a mixture. The mixture contained 2 parts of the modifier relative to 98 parts of the polyolefin resin. The mixture was used as the raw material for an outer layer (surface layer 1: layer A) on one side. Ethylene-(1-hexene) copolymer (R-1) was used as the raw material for an intermediate layer (layer B) and for an outer layer (surface layer 2: layer C) on the other side. The layers A to C were co-extruded by the T-die method while cooling them to 30 °C so as to obtain a laminated film (M-1) having a three-layered structure with a thickness of 100 µm. The thickness ratio of the layer A to the layer B to the layer C was 1 to 8 to 1.

### Examples 4-2 to 4-15 and Comparative Examples 4-1 to 4-4

In the same manner as the laminated film (M-1) of Example 4-1, laminated films (M-2 to M-15 and m-1 to m-4) were formed. The compositions and thicknesses of the laminated films are shown in Table 5.

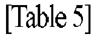

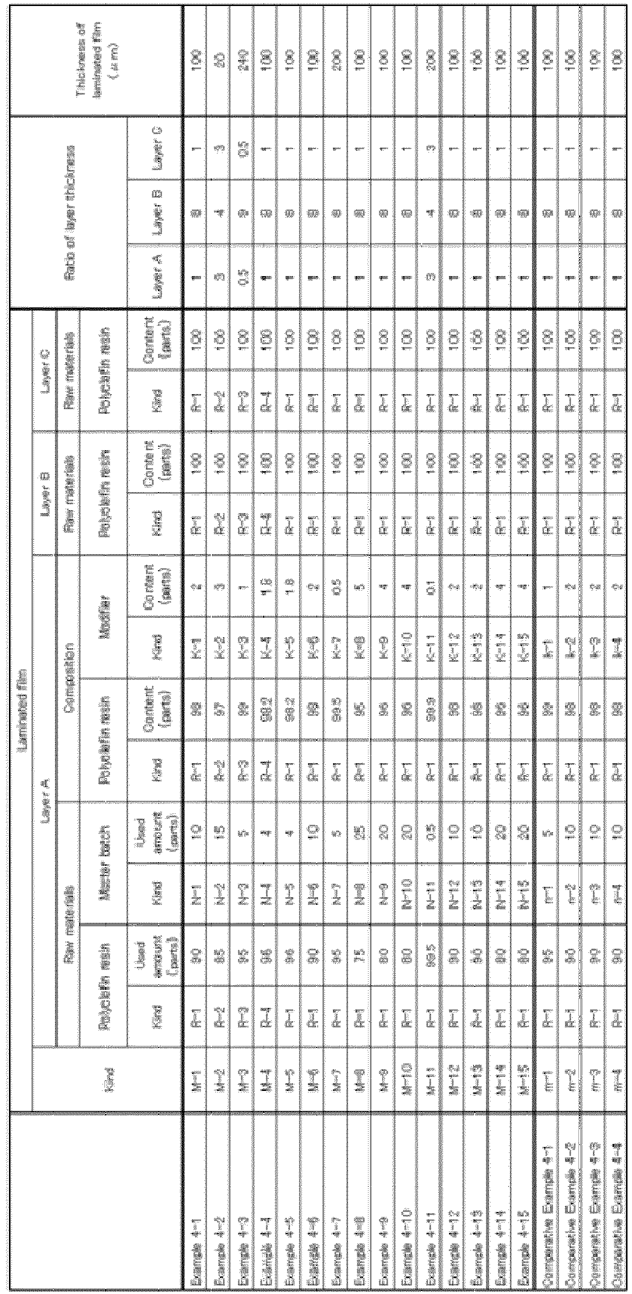

The anti-drip property, transparency, appearance, and productivity of the laminated films (M-1 to M-15 and m-1 to m-4) were tested by the above described methods. Table 6 shows test results of the laminated films.

**[Table 6]**

| | Laminated film | Result | | | | |
|---|---|---|---|---|---|---|
| | | Anti-drip property | | Transparency | Appearance | Productivity |
| | | Initial | Sustainable | | | |
| Example 4-1 | M-1 | 4 | 4 | 3 | 3 | 4 |
| Example 4-2 | M-2 | 4 | 4 | 3 | 3 | 4 |
| Example 4-3 | M-3 | 4 | 4 | 3 | 3 | 4 |
| Example 4-4 | M-4 | 4 | 4 | 3 | 3 | 4 |
| Example 4-5 | M-5 | 4 | 4 | 3 | 3 | 4 |
| Example 4-6 | M-6 | 4 | 4 | 3 | 3 | 4 |
| Example 4-7 | M-7 | 4 | 3 | 3 | 3 | 4 |
| Example 4-8 | M-8 | 4 | 3 | 3 | 3 | 4 |
| Example 4-9 | M-9 | 3 | 4 | 3 | 3 | 4 |
| Example 4-10 | M-10 | 3 | 4 | 3 | 3 | 4 |
| Example 4-11 | M-11 | 2 | 2 | 3 | 3 | 3 |
| Example 4-12 | M-12 | 2 | 2 | 2 | 3 | 3 |
| Example 4-13 | M-13 | 2 | 2 | 2 | 3 | 3 |
| Example 4-14 | M-14 | 2 | 2 | 2 | 2 | 3 |
| Example 4-15 | M-15 | 2 | 2 | 2 | 2 | 2 |
| Comparative Example 4-1 | m-1 | 2 | 1 | 3 | 3 | 4 |
| Comparative Example 4-2 | m-2 | 1 | 1 | 3 | 3 | 4 |
| Comparative Example 4-3 | m-3 | 3 | 1 | 3 | 3 | 4 |
| Comparative Example 4-4 | m-4 | 3 | 2 | 3 | 3 | 1 |

Examples 4-1 to 4-15 had a desired anti-drip property, transparency, appearance, and productivity. Comparative Example 4-1 had a bad sustainability of anti-drip property since the inorganic salt (C) contained therein was not selected from the group consisting of sodium sulfate, potassium sulfate, calcium sulfate, lithium sulfate, sodium chloride, potassium chloride, lithium chloride, magnesium chloride, or calcium chloride. Comparative Example 4-2 had a bad anti-drip property since a nonionic surfactant (A) was not contained therein. Comparative Example 4-3 had a bad sustainability of anti-drip property since an organic sulfonate (B) was not contained therein. Comparative Example 4-4 had a bad productivity since an inorganic substance (D) was not contained therein.

## Claims

1. A modifier for a polyolefin-based agricultural film, the modifier comprising:
a nonionic surfactant (A);
an organic sulfonate (B);
an inorganic salt (C) being one or more selected from the group consisting of sodium sulfate, potassium sulfate, calcium sulfate, lithium sulfate, sodium chloride, potassium chloride, lithium chloride, magnesium chloride, and calcium chloride; and
an inorganic substance (D) other than the inorganic salt (C).

2. The modifier according to claim 1, wherein the nonionic surfactant (A) is a fatty acid ester having at least one hydroxyl group; and
the fatty acid ester is formed of:
a polyhydric alcohol; and
one or more fatty acids and/or one or more fatty acid derivatives.

3. The modifier according to claim 1 or 2, wherein the organic sulfonate (B) is one or more selected from the group consisting of alkali metal salts of alkyl sulfonic acids each having an alkyl group with 6 to 22 carbon atoms, alkali metal salts of alkyl aryl sulfonates each having an alkyl group with 6 to 22 carbon atoms, and alkali metal salts of sulfo fatty acid esters each having an alkyl group with 6 to 22 carbon atoms.

4. The modifier according to any one of claims 1 to 3, wherein the inorganic substance (D) is one or more selected from the group consisting of silica, zeolite, talc, and diatomaceous earth.

5. The modifier according to any one of claims 1 to 4, wherein the amount of the inorganic substance (D) is 1 to 75 parts by mass when the total amount of the nonionic surfactant (A), the organic sulfonate (B), the inorganic salt (C), and the inorganic substance (D) is 100 parts by mass.

6. The modifier according to any one of claims 1 to 5, further comprising an antioxidant (E).

7. The modifier according to claim 6, wherein the amount of the inorganic substance (D) is 2 to 70 parts by mass when the total amount of the nonionic surfactant (A), the organic sulfonate (B), the inorganic salt (C), the inorganic substance (D), and the antioxidant (E) is 100 parts by mass.

8. A master batch for a polyolefin-based agricultural film, the master batch comprising:
the modifier according to any one of claims 1 to 7; and
a polyolefin resin,
wherein the amount of the modifier is 10 to 45 parts by mass when the total amount of the modifier and the polyolefin resin is 100 parts by mass.

9. A polyolefin-based agricultural film, comprising:
the modifier according to any one of claims 1 to 7; and
a polyolefin resin,
wherein the amount of the modifier is 0.1 to 5 parts by mass when the total amount of the modifier and the polyolefin resin is 100 parts by mass.

10. A laminated film comprising the polyolefin-based agricultural film according to claim 9 as one or more of surface layers thereof.
